(19) Europäisches Patentamt
European Patent Office
Office européen des brevets

(11)     **EP 2 823 925 B1**

(12)     **EUROPEAN PATENT SPECIFICATION**

(45) Date of publication and mention
of the grant of the patent:
**13.09.2017 Bulletin 2017/37**

(21) Application number: **12870601.7**

(22) Date of filing: **09.03.2012**

(51) Int Cl.:
***B23G 5/06*** (2006.01)

(86) International application number:
**PCT/JP2012/056200**

(87) International publication number:
**WO 2013/132665 (12.09.2013 Gazette 2013/37)**

(54)  **SPIRAL TAP**

SPIRALGEWINDEBOHRER

ROBINET HÉLICOÏDAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.01.2015 Bulletin 2015/03**

(73) Proprietor: **OSG Corporation
Aichi 442-0005 (JP)**

(72) Inventor: **ITO Jitsuro
Toyokawa-shi
Aichi 441-1231 (JP)**

(74) Representative: **TBK
Bavariaring 4-6
80336 München (DE)**

(56) References cited:
**JP-A- H01 171 725        JP-A- H01 171 725
JP-A- 2005 279 832        US-A1- 2008 069 653
US-A1- 2008 069 653       US-A1- 2008 075 550**

## Description

### TECHNICAL FIELD

The present invention relates to a spiral tap that is a rotary cutting tool forming a female screw by cutting on an inner circumferential surface of a prepared hole and is particularly related to a highly-durable tap capable of machining of a female screw in difficult-to-machine material even when water-soluble cutting fluid is used.

### BACKGROUND ART

As described in Patent Documents 1, 2, and 3, a spiral tap is known that forms a female screw by cutting on an inner circumferential surface of a prepared hole made of metal. Such a spiral tap is made up of a screw portion on a tip side and a shank portion on a base end side and the screw portion is provided with a male screw corresponding to a female screw to be formed. The screw portion is made up of a biting portion with a screw thread of the male screw gradually lowering toward the tip and a complete thread portion with a screw thread having a substantially uniform shape. The screw portion has a helical flute formed to intersect with the screw thread, and a cutting edge is formed on one end surface of the screw thread divided by the helical flute.

### PRIOR ART DOCUMENTS

Patent Documents

Patent Document 1: Japanese Unexamined Utility Model Application Publication No. 52-153198
Patent Document 2: Japanese Unexamined Utility Model Application Publication No. 05-044417
Patent Document 3: Japanese Laid-Open Patent Publication No. 01-171725

Spiral taps described in Patent Documents 1, 2, and 3 have not only a helical flute but also a spiral point flute formed in a tip portion in the heliacal flute with a small helix angle for discharging chips toward the front side and, relative to a cutting edge formed on a ridgeline between a side wall surface toward a tap rotation direction out of a pair of side wall surfaces of the spiral flute and an outer circumferential surface of the screw portion, a helix angle of a cutting edge formed on a ridgeline between a side wall surface of the spiral point flute opposed to the tap rotation direction and the outer circumferential surface of the screw portion is sloped in the opposite direction. As a result, chips cut by the cutting edge formed by the spiral point flute are discharged to the front side and short spiral chips with a smaller curl diameter are discharged even in the case of a blind hole.

Furthermore, a spiral tap according to the preamble of claim 1 is known from US 2008/0069653 A.

### SUMMARY OF THE INVENTION

Problem to Be Solved by the Invention

However, with regard to work material cut by the tap, heat resistant alloy such as nickel-base heat resistant alloy and precipitation-hardened stainless steel is known as difficult-to-machine material that is difficult to cut. Particularly, nickel-base heat resistant alloy with hardness of HRC 40 or higher after ageing treatment causes significant wear of tool edges due to a high-temperature/high-heat state during machining of a female screw by using the conventional taps. Therefore, spiral taps have a short life and the taps must frequently be replaced. Particularly, such a problem is marked in the tap machining using water-soluble cutting fluid.

The present invention was conceived in view of the situations and it is therefore an object of the present invention to provide a spiral tap having durability in female screw cutting of difficult-to-machine material like heat resistant alloy such as nickel-base heat resistant alloy and precipitation-hardened stainless steel.

Means for Solving the Problem

According to the present invention, the above object is solved with a spiral tap having the features of claim 1.

That is, as a result of various examinations in view of the situations, the present inventor repeatedly conducted cutting tests of spiral taps by changing a helix angle of a secondary flute formed in a tip portion of a primary flute corresponding to a spiral flute, a rake angle of a cutting edge formed by the secondary flute, and a flute bottom slope of the secondary flute and found out the fact that the life of the tap is significantly increased by 1.5 times or more when the helix angle of the secondary flute is within a range of 0 to 3 degrees; the rake angle of the cutting edge formed by the secondary flute is within a range of -10 to 0 degrees; and the flute bottom slope of the secondary flute is within a range of 5 to 15 degrees regardless of the helix direction of the primary flute. The present invention was conceived based on this knowledge.

That is, the present invention provides a spiral tap comprising: (a) a screw portion provided with a male screw; a primary flute in a helical shape formed to intersect with a screw thread of the male screw; and a secondary flute formed in a tip portion in the primary flute at a helix angle smaller than a helix angle of the primary flute, wherein (b) the secondary flute has a positive or negative helix angle of 0 to 3 degrees, wherein (c) a cutting edge is formed on a ridgeline between a side wall surface toward a tap rotation direction out of a pair of side wall surfaces of the secondary flute and an outer circumferential surface of the screw portion and has a rake angle of -10 to 0 degrees, and wherein (d) the secondary flute has a flute bottom slope of 5 to 15 degrees.

Effects of the Invention

According to the tap of the present invention, the secondary flute formed in the tip portion in the primary flute has the positive or negative helix angle of 0 to 3 degrees;
the cutting edge is formed on a ridgeline between the side wall surface toward the tap rotation direction of the secondary flute and the outer circumferential surface of the screw portion and has the rake angle of -10 to 0 degrees; and the secondary flute has the flute bottom slope of 5 to 15 degrees. Therefore, the tap life is significantly improved at the time of female screw machining of difficult-to-machine material and the highly durable tap is acquired. When the secondary flute is twisted in the direction opposite to the helix direction of the primary flute, if the helix angle of the secondary flute exceeds 3 degrees, chips are extended and the machining becomes difficult even in a blind hole. When the helix angle of the secondary flute is inclined on the same side as the helix direction of the primary flute, if the helix angle of the secondary flute exceeds 3 degrees, clogging of chips occurs. If the flute bottom slope of the secondary flute falls below 5 degrees, clogging of chips occurs. If the flute bottom slope of the secondary flute exceeds 15 degrees, the tip strength decreases. If the rake angle of the cutting edge formed on a ridgeline between the side wall surface toward the tap rotation direction out of a pair of the side wall surfaces of the secondary flute and the outer circumferential surface of the screw portion becomes lower than -10 degrees, the tap life decreases and, also if the rake angle exceeds 0 degrees, the tap life decreases.

Preferably, out of a pair of side edges of the secondary flute formed in the tip portion in the primary flute, a side edge of the secondary flute on a helix direction side of the primary flute is positioned on an opposite side of the helix direction as compared to a side edge of the primary flute on the helix direction side, wherein a side edge of the secondary flute on the opposite side of the helix direction side is positioned on the opposite side of the helix direction as compared to a side edge of the primary flute on the opposite side of the helix direction side, and wherein the side wall surface of the secondary flute toward a tap rotation direction acts as a rake surface. Therefore, since the secondary flute has a flute bottom formed from a curve with a curvature radius smaller than the primary flute, chips moving along the rake surface are curled at a smaller radius and made shorter.

BRIEF DESCRIPTION OF THE DRAWINGS

Fig. 1 is a front view of a tap that is an example of the present invention.

Fig. 2 is an enlarged cross-sectional view illustrating cross-sectional shapes of a primary flute and a secondary flute formed in a tip portion of the tap in the example of Fig. 1.
Fig. 3 is a diagram for explaining the flute bottom slope of the secondary flute in the example of Fig. 1.
Fig. 4 is a diagram of the result of a cutting test 1 in which the helix angle and the flute bottom slope of the secondary flute are different, with regard to taps having the right-hand primary flute as is the case with the example of Fig. 1.
Fig. 5 is a diagram of the result of a cutting test 2 in which the rake angle of the rake surface formed by the side wall surface toward the tap rotation direction in the secondary flute is different, with regard to taps as is the case with the example of Fig. 1.
Fig. 6(a) is a photograph of a chip acquired at the time of cutting by using the tap same as the tap of the example of Fig. 1 except that the secondary flute is not formed. Fig. 6(b) is a photograph of a chip acquired at the time of cutting by using the tap of the example of Fig. 1.
Fig. 7 is a diagram of the result of a cutting test in which cutting is performed with water-soluble cutting oil at four types of cutting speeds, with regard to taps as is the case with the example of Fig. 1.

MODE FOR CARRYING OUT THE INVENTION

An example of the present invention will now be described in detail with reference to the drawings.

Example

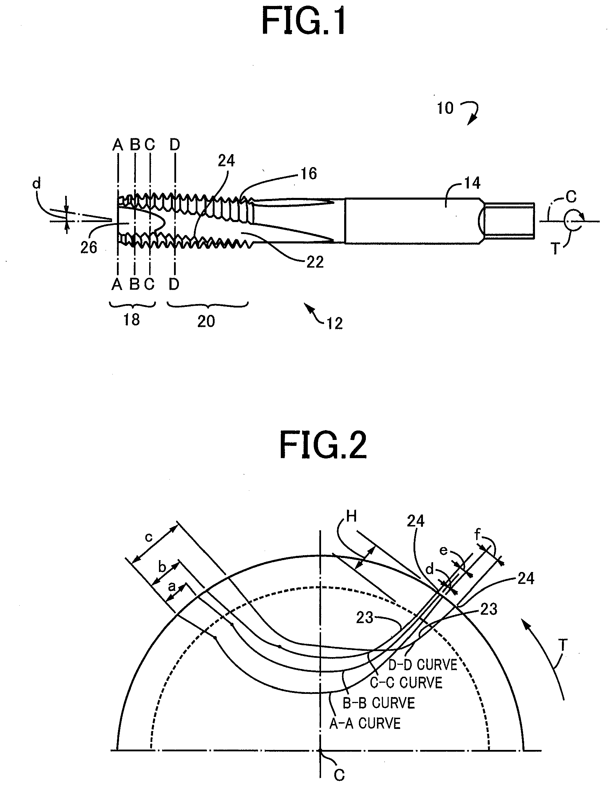

Fig. 1 is a front view of a spiral tap with a secondary flute (hereinafter simply referred to as tap) 10 that is an example of the present invention viewed from a direction orthogonal to an axial center C thereof. The tap 10 is made of high-speed steel or cemented carbide and has high durability capable of screw machining in a practical manner in difficult-to-machine material like heat resistant alloy such as nickel-base heat resistant alloy and precipitation-hardened stainless steel or, particularly, nickel-base heat resistant alloy with hardness of HRC 40 or higher after ageing treatment.

The tap 10 is for right-hand screws and is made up of a screw portion 12 on a tip side and a shank portion 14 on a base end side, and an outer circumferential surface of the screw portion 12 is provided with a right-hand male screw 16 corresponding to a female screw to be formed. The screw portion 12 is made up of a cone-shaped biting portion 18 with a screw thread of the male screw 16 gradually lowering and a column-shaped complete thread portion 20 with the uniform height of the screw thread.

The screw portion 12 has, for example, three right-hand spiral flutes, i.e., primary flutes 22, formed to intersect with the male screw 16 and to have a uniform distance from the axial center C to a flute bottom, i.e., a uniform flute depth, and the male screw 16 is divided into a plurality of parts. A helix angle, i.e., a lead angle α, of the primary flutes 22 is, for example, 8 to 15 degrees, preferably 10 to 12 degrees, and more preferably 10 degrees. As a result, a cutting edge 24 is formed by a line of intersection between a side wall surface (rake surface) 23 (described later) toward a tap rotation direction T out of a pair of side wall surfaces in the primary flutes 22 and the outer circumferential surface of the screw portion 12, and the side wall surface toward the tap rotation direction T acts as the rake surface of the cutting edge 24.

The tap rotation direction T is a direction of rotational drive of the tap 10 at the time of cutting of a female screw and is the right rotation same as the helix direction of the primary flutes 22 as indicated by an arrow of Fig. 1.

A tip portion in the primary flute 22 is provided with a secondary flute 26 formed at a helix angle (lead angle) β smaller than the helix angle α of the primary flute 22 in the tip portion in the primary flute 22 and the secondary flute 26 is formed with a slope such that a flute bottom diameter thereof becomes smaller toward the tip portion. The helix angle β of the secondary flute 26 is set within a range of 0 to 3 degrees in the right-hand helix direction, and a rake angle S of the cutting edge 24 formed by the side wall surface 23 (described later) toward the tap rotation direction T in the secondary flute 26 is set within a range of -10 to 0 degrees. A flute bottom slope K of the secondary flute 26 is set to be within a range of 5 to 15 degrees. The helix angle β is a slope (intersection) angle of a flute width center line to the axial center C as is the case with the helix angle α. The rake angle S is an angle to a line passing through the cutting edge 24 parallel to the axial center C. The flute bottom slope K is an angle of the flute bottom of the secondary flute 26 without a lead relative to the axial center C.

Fig. 2 is an enlarged view of a tip surface of the tap 10 for explaining a shape of the secondary flute 26, including a section line A-A, a section line B-B, a section line C-C, and a section line D-D indicative of cross-sectional shapes of the primary flute 22 and the secondary flute 26. In the section line A-A, the section line B-B, and the section line C-C, the side wall surface 23 opposed to the tap rotation direction T has a line indicative of the linear primary flute 22 followed by an curve indicative of the arc-like secondary flute 26, and the side wall surface 23 toward the tap rotation direction T is made up only of the curve indicative of the secondary flute 26. A connection point between the line indicative of the primary flute 22 and the curve indicative of the arc-like secondary flute 26 is indicated by a black point. Since the secondary flute 26 is formed slightly longer than an axial center C direction length of the tip portion, i.e., the biting portion 18, of the tap 10 and does not reach a cross-section D-D of Fig. 1, the section line D-D is made up only of a line indicative of the inverted trapezoidal primary flute 22.

If the tap 10 cuts a female screw of M10×1.5, i.e., having a diameter of 10 millimeters and a pitch of 1.5 millimeters, the section lines A-A, B-B, C-C, and D-D of Fig. 2 on the side wall surface 23 side opposed to the tap rotation direction T have circumferential mutual intervals a, b, and c of 0.7 mm, 1.0 mm, and 1.6 mm and are shifted in series depending on the lead angle α of the primary flute 22. The section lines A-A, B-B, and C-C of Fig. 2 on the side wall surface 23 side toward the tap rotation direction T indicate a rake surface of the cross section used for cutting, have circumferential mutual intervals d and e of 0.07 mm and 0.15 mm, and are substantially identical because of the small lead angle β of the secondary flute 26. However, the section line D-D of Fig. 2 on the side wall surface 23 side toward the tap rotation direction T indicates a curve of the cross section not used for cutting, and the section lines A-A and D-D have a mutual interval f of 0.4 mm. A screw thread height of the complete thread portion 20 indicated by H of Fig. 2 is 0.8 mm.

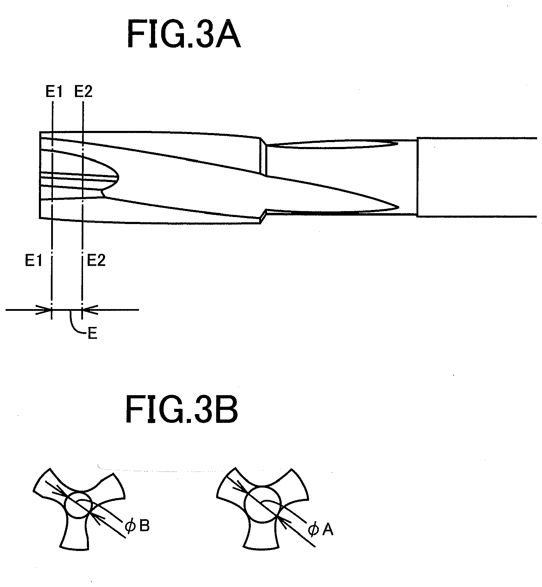

Fig. 3 is a diagram for explaining the flute bottom slope K of the secondary flute 26. As depicted in Fig. 3, for example, when a predetermined section E of 1.5 mm is set such that the predetermined section E is set in a longitudinal direction of the secondary flute 26, i.e., the axial center C direction of the tap 10 (Fig. 3(a)) to measure a flute bottom diameter Bmmφ in a cross section E1-E1 and a flute bottom diameter Ammφ in a cross section E2-E2 (Fig. 3(b)) at the both ends of the predetermined section E, the flute bottom slope K of the secondary flute 26 is a value calculated from the following Equation (1). Since the secondary flute 26 is linearly formed, the predetermined section E may be set to any value shorter than the longitudinal dimension of the secondary flute 26; however, the above value is used since accuracy cannot be achieved if the predetermined section E is too short.

$$K = \tan^{-1}(A-B)/(2\times E) \qquad \ldots(1)$$

A cutting test 1 conducted by the present inventors will hereinafter be described. In the cutting test 1, with regard to spiral taps having the primary flutes 22 with the right-hand helix angle α=11 degrees as is the case with the tap 10 depicted in Fig. 1, eight types of taps were produced such that the rake angle S of -5 degrees is constant while the helix angle (lead angle) β and the flute bottom slope K of the secondary flute 26 are different, and female screws were cut under the following cutting conditions.

(Cutting Test 1)

Tap: 3/8-16 UNC spiral tap
Cutting speed: 2 m/min
Work material: 45-HRC nickel-base heat resistant alloy
Prepared hole diameter: 8.1 mmφ
Tapping length: 14 mm
Cutting fluid: water-insoluble cutting oil
Oil feed method: external oil feed

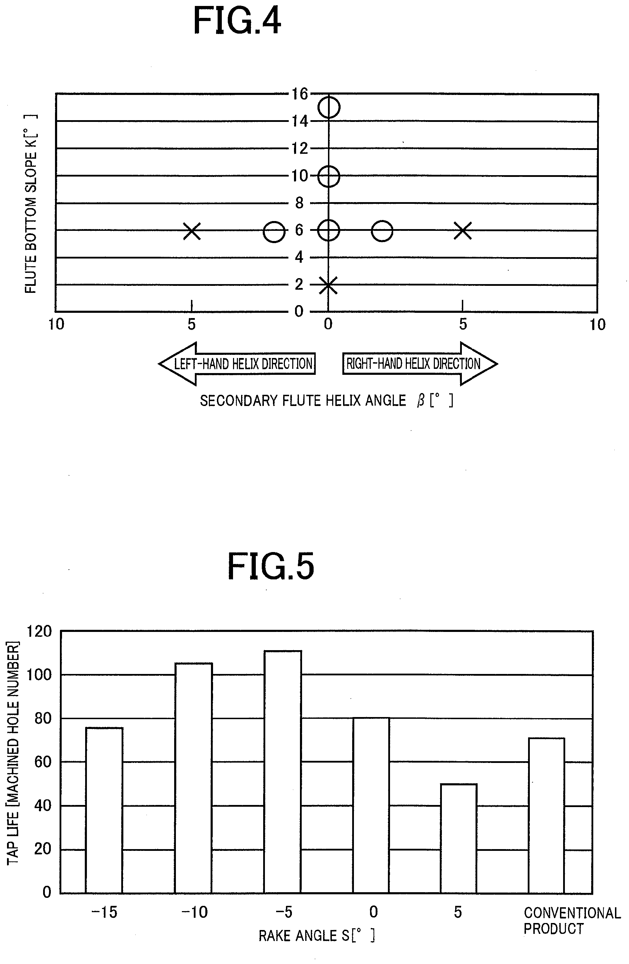

Fig. 4 depicts two-dimensional coordinates representing the result of the cutting test 1 and consisting of a horizontal axis indicative of the helix angle β of the secondary flute 26 in the right-hand and left-hand helix directions and a vertical axis indicative of the flute bottom slope K of the secondary flute 26. In Fig. 4, circles indicate highly-durable taps capable of machining of about 20 or more tap holes. On the other hand, a cross mark indicative of a tap with the left-hand helix angle β=5 degree and the flute bottom slope K=6 degrees indicates a tap with which the machining in a blind hole was difficult because of longer length of chips. Respective cross marks indicative of a tap with the right-hand helix angle β=5 degree and the flute bottom slope K=6 degrees and a tap with the helix angle β=0 degree and the flute bottom slope K=2 degrees indicate taps unable to achieve sufficient durability since the machined hole number was one or less due to occurrence of clogging of chips. Therefore, the durability was achieved when the helix angle β of the secondary flute 26 was within a range of 0 to 3 degrees in the right-hand and left-hand helix directions and the flute bottom slope K of the secondary flute 26 is within a range of 5 to 15 degrees. Although no cutting test was conducted for the flute bottom slope K of 16 degrees or more, it is contemplated that breakage is likely to occur due to reduction in strength.

A cutting test 2 conducted by the present inventor will hereinafter be described. In the cutting test 2, with regard to spiral taps having the primary flutes 22 with the right-hand helix angle α=11 degrees as is the case with the tap 10 depicted in Fig. 1, five types of taps were produced such that the helix angle (lead angle) β=0 degrees and the flute bottom slope K=8 degrees of the secondary flute 26 were constant while the rake angle S is different, along with a tap of conventional specifications having the rake angle of 0 degrees without forming the secondary flute 26, and female screws were cut under the following cutting conditions.

(Cutting Test 2)

Tap: 1/4-28 UNC spiral tap
Cutting speed: 2 m/min
Work material: 45-HRC nickel-base heat resistant alloy
Prepared hole diameter: 5.52 mmφ
Tapping length: 12.7 mm
Cutting fluid: water-insoluble cutting oil
Oil feed method: external oil feed

Fig. 5 depicts two-dimensional coordinates representing the result of the cutting test 2 and consisting of a horizontal axis indicative of the rake angle S and a vertical axis indicative of the tap life (machined hole number). In Fig. 5, it is indicated that the rake angle S within a range of 0 to -10 degrees results in highly-durable taps capable of machining about 80 or more tap holes. On the other hand, when the rake angle S exceeds 0 degrees, the machined hole number is reduced lower than the conventional product to 50 or less and the high durability as described above is not achieved. Therefore, high durability was achieved when the rake angle S was within a range of 0 to -10 degrees.

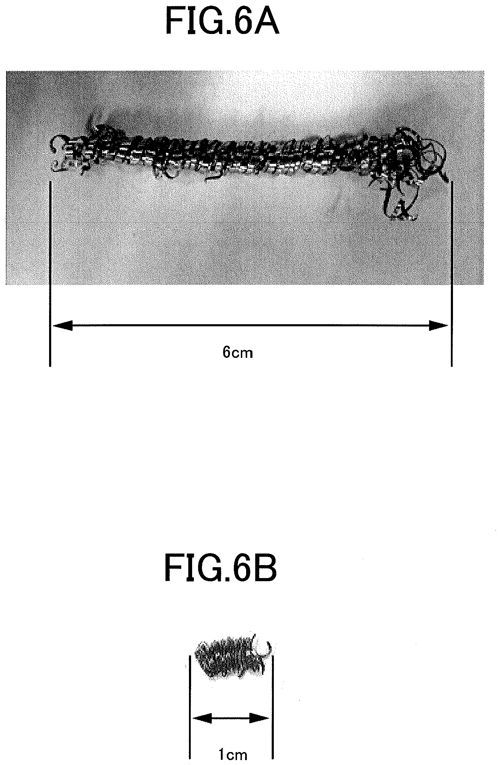

Fig. 6(a) depicts a chip in the case of cutting of 43-HRC nickel-base heat resistant alloy by a conventional tap having the helix angle (lead angle) β of a spiral point flute corresponding to the secondary flute 26 exceeding 5 degrees as described in Cited Documents 1, 2, and 3. Although such a conventional spiral point tap has a longer life and more stable performance as compared to a spiral tap without the secondary flute 26, since chips are long, durability is not achieved because of clogging when the tap is used in a blind hole. On the other hand, according to the tap 10 of this example having the helix angle β of the secondary flute 26 set within a range of 0 to 3 degrees in the right-hand or left hand helix direction, the rake angle S of the cutting edge 24 set within a range of -10 to 0 degrees, and the flute bottom slope K of the secondary flute 26 set within a range of 5 to 15 degrees, since chips are shortened as depicted in Fig. 6(b), high durability is achieved even when the prepared hole is a blind hole, as is the case with a through-hole.

A cutting test 3 conducted by the present inventor will hereinafter be described. In the cutting test 3, with regard to spiral taps having the primary flutes 22 with the right-hand helix angle α=11 degrees as is the case with the tap 10 depicted in Fig. 1, female screws were cut by using a tap having the constant helix angle (lead angle) β=0 degrees and flute bottom slope K=8 degrees of the secondary flute 26 and the rake angle S=-5 degrees and water-soluble cutting oil at four types of cutting speeds under the following cutting conditions.

(Cutting Test 3)

Tap: M5×0.8 spiral tap
Work material: 45-HRC nickel-base heat resistant alloy
Prepared hole diameter: 4.3 mmφ
Prepared hole length: 18 mm (blind)
Screw length: 10.0 mm (blind)
Cutting speed: 0.25 m/min, 0.5 m/min, 0.75 m/min, 1.0 m/min,
Cutting fluid: water-soluble cutting oil diluted 10 times
Oil feed method: external oil feed

Machining machine: vertical type M/C BT30

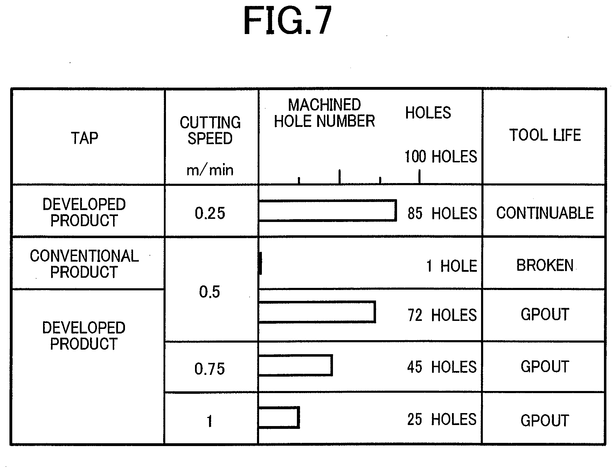

Fig. 7 is a chart of the result of the cutting test 3. Although the conventional tap same as that depicted in Fig. 1 except the absence of the secondary flute 26 was broken after cutting of one hole even at a relatively low cutting speed of 0.5 m/min, the tap used in this cutting test was capable of the female screw machining within a tolerance up to 25 holes before causing accuracy failure (GPOUT) at the cutting speed of 1 m/min, was capable of the female screw machining within a tolerance up to 45 holes before causing accuracy failure (GPOUT) at the cutting speed of 0.75 m/min, was capable of the female screw machining within a tolerance up to 72 holes before causing accuracy failure (GPOUT) at the cutting speed of 0.5 m/min, and was capable of the female screw machining of 85 holes or more at the cutting speed of 0.25 m/min. Therefore, even when water-soluble cutting oil was selected for the cutting, high durability was achieved by selecting optimum cutting speed.

As described above, the tap 10 of this example is a spiral tap including the screw portion 12 provided with the male screw 16, the primary flute 22 in a helical shape formed to intersect with a screw thread of the male screw 16, and the secondary flute 26 formed in a tip portion in the primary flute 22 at a helix angle smaller than the helix angle $\alpha$ of the primary flute 22; the secondary flute 26 has the positive or negative helix angle $\beta$ of 0 to 3 degrees; the cutting edge 24 is formed on a ridgeline between the side wall surface 23 toward the tap rotation direction T of the secondary flute 26 and the outer circumferential surface of the screw portion 12 and has the rake angle S of -10 to 0 degrees; and the secondary flute 26 has the flute bottom slope K of 5 to 15 degrees. Therefore, the tap life is significantly improved at the time of female screw machining of difficult-to-machine material such as 45-HRC nickel-base heat resistant alloy and the highly durable tap is acquired. When the secondary flute 26 is twisted in the direction opposite to the helix direction of the primary flute 22, if the helix angle $\beta$ of the secondary flute 26 exceeds 3 degrees, chips are extended and the machining becomes difficult even in a blind hole. When the helix angle $\beta$ of the secondary flute 26 is inclined on the same side as the helix direction of the primary flute 22, if the helix angle $\beta$ of the secondary flute 26 exceeds 3 degrees, clogging of chips occurs. If the flute bottom slope K of the secondary flute 26 falls below 5 degrees, clogging of chips occurs. If the flute bottom slope S of the secondary flute 26 exceeds 15 degrees, the tip strength is estimated to decrease. If the rake angle S of the cutting edge 24 formed on a ridgeline between the side wall surface 23 toward the tap rotation direction T out of a pair of the side wall surfaces of the secondary flute 26 and the outer circumferential surface of the screw portion 12 becomes lower than -10 degrees (the absolute value of a negative value increases), the tap life decreases and, also if the rake angle S exceeds 0 degrees, the tap life decreases.

According to the tap 10 of this example, out of a pair of side edges of the secondary flute 26 formed in the tip portion in the primary flute 22, a side edge on the helix direction side of the primary flute 22 is positioned on the opposite side of the helix direction (tap rotation direction T) as compared to a side edge of the primary flute 22 on the helix direction side, and a side edge on the opposite side of the helix direction is positioned on the opposite side as compared to a side edge of the primary flute 22 on the opposite side of the helix direction, and the side wall surface 23 of the secondary flute 26 toward the tap rotation direction T acts as the rake surface 23. Therefore, since the secondary flute 26 has the flute bottom formed from a curve with a curvature radius smaller than the primary flute 22, chips moving along the side wall surface (rake surface) 23 are curled at a smaller radius and made shorter.

Although the example of the present invention has been described in detail with reference to the drawings, the present invention is applied in other forms.

Although the tap 10 of the example has the helix angle $\beta$ of the secondary flute 26 set within the range of 0 to 3 degrees in the right-hand helix direction, the helix angle $\beta$ may be set to -3 to 0 degrees. In short, as depicted in Fig. 4, the helix angle $\beta$ may be set within the range of -3 to 3 degrees regardless of the helix direction of the primary flute 22.

The tap 10 of the example may be changed as needed in terms of material, diameter, the helix angle $\alpha$ of the primary flute 22, etc.

The above description is merely an embodiment of the present invention and the present invention may be implemented in variously modified and improved forms based on the knowledge of those skilled in the art within the scope of the claims.

NOMENCLATURE OF ELEMENTS

    10: tap
    12: screw portion
    16: male screw
    22: primary flute
    23: side wall surface (rake surface)
    24: cutting edge
    26: secondary flute
    C: axial center
    $\beta$: helix angle of the secondary flute
    K: flute bottom slope of the secondary flute
    S: rake angle of the cutting edge

**Claims**

1. A spiral tap (10) comprising: a screw portion (12) provided with a male screw (16); a primary flute (22) in a helical shape formed to intersect with a screw thread of the male screw; and a secondary flute (26) formed in a tip portion in the primary flute (22), wherein

a cutting edge (24) is formed on a ridgeline between a side wall surface (23) toward a tap rotation direction (T) out of a pair of side wall surfaces of the secondary flute (26) and an outer circumferential surface of the screw portion (12) and has a rake angle (S) of -10 to 0 degrees, and wherein

the secondary flute (26) has a flute bottom slope (K) of 5 to 15 degrees, **characterized in that**

the secondary flute (26) is formed at a helix angle smaller than a helix angle ($\alpha$) of the primary flute (22), and

the secondary flute (26) has a positive or negative helix angle ($\beta$) of 0 to 3 degrees.

2. The spiral tap of claim 1, wherein out of a pair of side edges of the secondary flute (26) formed in the tip portion in the primary flute (22), a side edge of the secondary flute (26) on a tap rotation direction side of the primary flute (22) is positioned on an opposite side of the tap rotation direction (T) as compared to a side edge of the primary flute (22) on the tap rotation direction side, wherein a side edge of the secondary flute (26) on the opposite side of the tap rotation direction side is positioned on the opposite side of the tap rotation direction (T) as compared to a side edge of the primary flute (22) on the opposite side of the tap rotation direction side, and wherein the side wall surface (23) of the secondary flute (26) toward the tap rotation direction (T) acts as a rake surface.

**Patentansprüche**

1. Spiralgewindebohrer (10) mit: einem Schraubenabschnitt (12), der mit einer Schraubenspindel (16) versehen ist; einer Primärspannut (22) in einer Schraubenform, die ausgebildet ist, um mit einem Schraubengewinde der Schraubenspindel (16) zu kreuzen; und einer Sekundärspannut (26), die in einem Spitzenabschnitt in der Primärspannut (22) ausgebildet ist, wobei

eine Schneidkante (24) an einer Kammlinie zwischen einer Seitenwandfläche (23) in Richtung einer Gewindebohrerrotationsrichtung (T) aus einem Paar Seitenwandflächen der Sekundärspannut (26) und einer Außenumfangsfläche des Schraubenabschnitts (12) ausgebildet ist und einen Spanwinkel (S) von -10 bis 0 Grad hat, und wobei die Sekundärspannut (26) eine Spannutbodenneigung (K) von 5 bis 15 Grad hat, **dadurch gekennzeichnet, dass**
die Sekundärspannut (26) mit einem Drallwinkel ausgebildet ist, der kleiner als ein Drallwinkel ($\alpha$) der Primärspannut ist, und
die Sekundärspannut (26) einen positiven oder negativen Drallwinkel ($\beta$) von 0 bis 3 Grad hat.

2. Spiralgewindebohrer gemäß Anspruch 1, wobei aus einem Paar Seitenkanten der Sekundärspannut (26), die in einem Spitzenabschnitt in der Primärspannut (22) ausgebildet ist, eine Seitenkante der Sekundärspannut (26) an einer Gewindebohrerrotationsrichtungsseite der Primärspannut (22) an einer der Gewindebohrerrotationsrichtung (T) entgegengesetzten Seite im Vergleich mit einer Seitenkante der Primärspannut (22) an der Gewindebohrerrotationsrichtungsseite positioniert ist, wobei eine Seitenkante der Sekundärspannut (26) an der der Gewindebohrerrotationsrichtungsseite entgegengesetzten Seite an der der Gewindebohrerrotationsrichtung (T) entgegengesetzten Seite im Vergleich mit einer Seitenkante der Primärspannut (22) an der der Gewindebohrerrotationsrichtungsseite entgegengesetzten Seite positioniert ist, und wobei die Seitenwandflächen (23) der Sekundärspannut (26) in Richtung der Gewindebohrerrotationsrichtung (T) als eine Spanfläche wirkt.

**Revendications**

1. Robinet hélicoïdal (10) comprenant : une partie de vis (12) prévue avec une vis mâle (16) ; une cannelure principale (22) formée selon une forme hélicoïdale pour interagir avec un filetage de vis de la vis mâle ; et une cannelure secondaire (26) formée dans une partie de pointe de la cannelure principale (22), dans lequel :

un bord de coupe (24) est formé sur une ligne de crête entre une surface de paroi latérale (23) vers une direction de rotation de robinet (T) parmi une paire de surfaces de paroi latérales de la cannelure secondaire (26) et une surface circonférentielle externe de la partie de vis (12) et a un angle de dégagement (S) de -10 à 0 degré, et dans lequel :

la cannelure secondaire (26) a une inclinaison inférieure de cannelure (K) de 5 à 15 degrés, **caractérisé en ce que** :

la cannelure secondaire (26) est formée à un angle hélicoïdal inférieur à un angle hélicoïdal ($\alpha$) de la cannelure principale (22), et
la cannelure secondaire (26) a un angle hélicoïdal positif ou négatif ($\beta$) de 0 à 3 degrés.

2. Robinet hélicoïdal selon la revendication 1, dans lequel parmi une paire de bords latéraux de la cannelure secondaire (26) formée dans la partie de pointe dans la cannelure principale (22), un bord latéral de la cannelure secondaire (26) du côté de la direction de rotation du robinet de la cannelure principale (22) est positionné sur un côté opposé de la direction de rotation de robinet (T) par rapport à un bord latéral de la cannelure principale (22) du côté de la direction de rotation de robinet, dans lequel un bord latéral de la cannelure secondaire (26) du côté opposé du côté de la direction de rotation du robinet est positionné sur le côté opposé de la direction de rotation de robinet (T) par rapport à un bord latéral de la cannelure principale (22) sur le côté opposé du côté de la direction de rotation du robinet, et dans lequel la surface de paroi latérale (23) de la cannelure secondaire (26) vers la direction de rotation du robinet (T) sert de surface de dégagement.

# FIG.1

# FIG.2

# FIG.3A

# FIG.3B

# FIG.4

# FIG.5

# FIG.6A

6cm

# FIG.6B

1cm

# FIG.7

| TAP | CUTTING SPEED m/min | MACHINED HOLE NUMBER | | TOOL LIFE |
|---|---|---|---|---|
| DEVELOPED PRODUCT | 0.25 | | 85 HOLES | CONTINUABLE |
| CONVENTIONAL PRODUCT | 0.5 | | 1 HOLE | BROKEN |
| DEVELOPED PRODUCT | | | 72 HOLES | GPOUT |
| | 0.75 | | 45 HOLES | GPOUT |
| | 1 | | 25 HOLES | GPOUT |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 52153198 A
- JP 5044417 A
- JP 1171725 A
- US 20080069653 A